# EUROPEAN PATENT SPECIFICATION

(11) **EP 2 471 625 B1**
(45) Date of publication and mention of the grant of the patent: **10.06.2015**
(21) Application number: 11460068.7
(22) Date of filing: 06.12.2011
(51) Int. Cl.: B23K 26/08, B23K 26/38, B23K 37/00, B23K 37/02, B23K 37/04, B23K 26/06, B23K 10/00

(54) **Machine for laser cutting with a gantry**
Laserschneidemaschine mit einem Portal
Machine de coupage laser avec un portique

(30) Priority: 13.12.2010 PL 39322410
(43) Date of publication of application: 04.07.2012
(73) Proprietor: Eckert, Tadeusz, 59-216 Kunice (PL)
(72) Inventor: Eckert, Tadeusz, 59-216 Kunice (PL)

(56) References cited:
- US-A1- 2009 233 536
- US-A1- 2009 271 025
- US-A1- 2010 147 810
- US-A1- 2010 252 542
- US-B1- 6 588 738

## Description

A cutting machine used in the processes of cutting out elements - pieces of flat, non-metal or metal sheets using a laser beam or a plasma torch.

There is a known cutting machine equipped with a cutting assembly in the form of a laser head, designed for cutting metal or non-metal elements, equipped with a cutting assembly - a focusing head, to which the laser beam from the laser source is directed along the optical path. The optical path includes elements deflecting the beam, which consist of mirrors and focusing lenses. The laser beam is transmitted inside bellows-type channels mounted at the end of the cutting machine structure which protects the environment from adverse effects of laser beams. The cutting machine is equipped with a workbench and a grid designed for placing workpieces. The cutting assembly is located on the supporting structure mounted above the workbench. The supporting structure contains: two side legs, a main beam, a gantry and also a gantry feed mechanism, a carriage feed mechanism and a laser head feed mechanism. The main beam is located above the workbench parallel to its longer sides, and is set on two side legs located along shorter sides of the workbench. The gantry equipped with a carriage for mounting the laser head is located on the main bar. The laser head is mounted slidably on the "Z" guide mounted to the carriage - the "Z" guide enables the movement the laser along the vertical axis. The carriage is mounted slidably on the "Y" guide which is mounted to the gantry - the "Y" guide enables the movement of the carriage with the laser head in the horizontal plane into the cabin - in parallel with the shorter sides of the workbench, the gantry is mounted slidably on the "X" guide which is mounted to the main beam - the "X" guide enables the movement of the gantry along with the carriage and the laser head in the horizontal plane - in parallel to the longer sides of the workbench.

The cutting machine known from the application US 20100147810 A1, basis for the preamble of claim 1, is equipped with a workbench and a grid designed for placing workpieces. A cutting assembly, which is located above the workbench on the supporting structure, contains a laser head which is connected to the laser source with an optical path in the form of an optical-fibre cable. An engineering bench designed for placing workpieces before or after treatment is located in front of the worktable at the extension of its longer edge. Furthermore, the cutting machine is fitted with a control panel with a display and a CNC computer controller equipped with software that enables the control of the laser head in the "X", "Y" and "Z" axes.

The cutting machine known from the application US 20090233536 A1 is equipped with a workbench, an engineering bench and two identical grids. Each grid is equipped with transportation rollers located at both ends of the longer sidewalls. The workbench is in the form of a footing which consists of four vertically positioned sidewalls forming a rectangle in a horizontal cross-section. In the upper part there is a grid trackway comprising two grid guides - left and right - fixed on the edges of the longer sides of the footing. The rear vertical wall of the workbench is complete and forms an outer wall of the workbench; the front wall forms the inner wall and a part of a rectangular chamber - an exhaust collector - to collect and remove gases emerging during the process of cutting, in the space located directly under the working plain. The exhaust collector is fitted with an outlet duct to remove gases through filters outside the process area. The central wall of the collector is equipped with rectangular exit windows located regularly along the upper part of the wall. These windows are covered by moving flaps opened by conventional means such as cam actuators etc. Furthermore, the cutting machine is fitted with a slag removing device equipped with a container placed in the space under the grid and a moving mechanism placed inside the exhaust collector. The container is moved during cutting according to the position of the cutting torch. The collected waste is poured into the tank outside the table. The engineering bench consists of a support frame, a lifting mechanism mounted thereon in the form of four column lifters located in the corners of the bench. The lower trackway and upper trackway situated directly above the lower trackway are placed on the lifters. Each trackway comprises two parallel guides - left and right. The trackways are designed for slidable mounting of one grid on each of them. The lifters are synchronized with each other, so that they remain in a horizontal position during the movement of the guides. The solution allows for the movement of grids between the engineering bench and the workbench.

The cutting machine known from the application US 20090271025 A1 is equipped with a treatment chamber in the form of laser machines, which is placed in a protective housing. The housing is fitted with a manually opened swing door allowing for access to the treatment zone and automatic safety door used during the transport of the workpiece. The treatment process is controlled by at least one control panel located outside the housing.

The cutting machine, according to the invention, is defined in claim 1, and is equipped with a cabin, inside which there is the assembly of cutting tools - with the laser head or with the laser head and plasma torch, the support system of the cutting tools, the workbench - to support the grid with the workpiece being cut placed thereon, the plate conveyor - placed under the workbench - for capturing and removal of waste and small elements into the container placed outside the cabin; outside the cabin the following are also located: engineering bench, control panel, CNC computer controller - equipped with software enabling the control of two tools, other cutting processes and energy sources for cutting tools. In addition, the cutter is equipped with two moving grids which, depending on the phase of the work cycle, are on the engineering bench, or one of them is on the engineering bench and the other on the workbench. The cabin of the cutting machine, according to the invention, is in the form of a hull that surrounds the assembly of cutting tools, with kinematic elements of their movement and the workbench. It is designed to protect the operator and bystanders from the harmful effects of laser beam reflections and reflections emerging during the process of laser cutting. The cabin is fitted with sliding doors situated in parallel to the length of the workbench. In the door plane, at least one visor is embedded which allows for safe observation of the cutting process. Alternatively or simultaneously the cutting machine is equipped with a preview system consisting of a camera mounted inside the cabin and a monitor placed outside, preferably on the control panel. The support system of the assembly of cutting tools contains: two side legs, a main beam, a gantry, one carriage - if the cutting machine is equipped with only a laser head or two carriages - the first and second carriage - when the cutting machine is fitted with two cutting tools - a laser head and a plasma torch, and also it contains a gantry feed mechanism, a carriage feed mechanism and respectively one or two feed mechanisms for cutting tools. The main beam is mounted on side legs located along the shorter sides of the workbench, and is located above the workbench in parallel to its longer sides. The gantry is slidably mounted on the main beam - on the "X" guide. The "X" guide allows the movement of the gantry in parallel to longer sides of the workbench. The gantry contains two vertical sidewalls connected to each with a horizontal wall - the bottom of the gantry. The "Y" guide, and alternatively the "Y¹" guide are set at the bottom of the gantry. They are designed for slidable mounting of one or two carriages - the first one on the "Y" guide and the other one on the "Y¹" guide. Each sidewall of the gantry is provided with a through hole whose surface is greater than the cross-section of the main beam. The main beam is shifted through these through holes. The gantry has two supports, on which there are integrally embedded sidewalls of the gantry. The supports are located on both sides of the main beam. Each support is equipped with trucks designed for positioning the carriage slidably on the main beam. The "Y" and "Y¹" guides enable the movement of the carriages along with the heads of the cutting tools in the horizontal plane into the cabin - in parallel to the shorter sides of the workbench. The laser head is mounted slidably on the "Z" guide mounted to the first carriage, while the plasma torch is mounted on the "Z¹" guide mounted to the second carriage. The "Z" and "Z¹" guides enable the movement of the cutting tools along the vertical axis. Each guide: "X", "Y", "Y¹", "Z", "Z¹", consists of two parallel linear tracks, wherein two carriages are located on each linear track, which ensures a rigid and precise operation of each of the components of the carrier system, i.e. a gantry, carriages and cutting tools. The gantry feed mechanism consists of an servomotor located thereon, which is connected with a zero backlash planetary gear with a pinion mounted on its output shaft; the pinion is meshed with a toothed bar attached to the main beam in parallel to the linear tracks of the "X" guide. The carriage feed mechanism consists of a servomotor placed on each carriage connected with the zero backlash planetary gear with the pinion mounted on its output shaft and attached to the toothed bar attached to the gantry in parallel to the linear tracks of the "Y" and " Y¹" guide. The feed mechanism of each cutting tool consists of a ball screw - located in parallel to the linear tracks of the "Z" and "Z¹" guide - with a nut combined to a servomotor through a belt transmission. Laser source is connected with a laser head using an optical-fibre cable. The optical-fibre cable is designed to direct the laser beam from the laser source to the tip of the laser head. The workbench is a frame - the footing - on which the grid is mounted slidably. The footing consists of four vertically positioned sidewalls forming a rectangle in a horizontal cross-section. The trackway is located in its upper part and it consists of two guides - left and right, which are mounted on the edges of the longer sides of the footing. The trackway enables the grid to enter the workspace, to maintain it in working position, and take it outside onto the engineering bench. Between the shorter walls of the footing two metal sheet plates are fixed and are deflected relative to one another in such manner, that their planes and the planes of the sidewalls form a V-block whose upper footing is open, while the lower footing is a flat bottom fitted with an oblong through hole extending between the sidewalls. The larger footing is directed upwards - it is an inlet of the V-block, while the smaller footing in the section containing a through hole is an outlet of the V-block which is located above the plate conveyor. The interior of the V-block is divided into sections by vertical partitions which are mounted between the sloping walls and are perpendicular to them. Inside each section - on distance supports - a chute is placed in the form of a truncated pyramid with open footings, wherein the height of the chute is such that its longer upper edges are similar to vertical partitions and lie just below the edge of the vertical partitions, while the shorter edges of the chute are located on the lamellar conveyor. The chutes are stabilized in sections only under their own weight. This allows the free replacement of each chute with a new one, which significantly reduces the downtimes of the cutting machine. The sloping walls of each section are provided with exit windows covered by a moving flap. The flaps are mounted on actuators, preferably air actuators, and they are designed to uncover the windows to enable the outlet of the gases generated in the process of burning the workpieces. The windows are uncovered while the burning process takes place on the surface of the grid located above the given section. After lifting the flap, the given section is connected to the gas extraction system. The grid feed assembly containing an endless chain, which is mounted on two return wheels, is attached to the longer side of the workbench located by the rear wall of the cabin. The feed assembly contains a drive mechanism, preferably in the form of the worm gear motor. The hoisting chain is fitted with a carrier designed to be coupled with a suitable carrier slot of one of the grids. The engineering bench consists of a supporting frame mounted on the straight-line lifting mechanism, lower trackway mounted on the lifting mechanism, upper trackway mounted above the lower trackway. Each trackway comprises two guides - left and right. The trackways are designed for slidable mounting of one grid on each of them. Preferably, scissor mechanism is used as the lifting mechanism with at least one hydraulic actuator. The lifting mechanism is designed to lift the grid to the desired height. Each grid is equipped with a carrier slot designed to connect the grid with the carrier of the grid feed assembly. The engineering bench is positioned outside the cabin, directly behind the workbench, so that the guides of the trackways - left and right - of the workbench and the engineering bench are respectively in the same vertical plane. Prior to the first cut, the two grids are placed on the engineering bench - one mounted on the lower trackway and the other mounted on upper trackway. A workpiece to be cut is placed onto the grid located on the upper trackway and then successively: the engineering bench is moved - using the lifting mechanism - so that the upper trackway is located at the extension of the workbench; in this position, the carrier slot of the grid lying on the upper trackway is connected to the carrier of the grid feed assembly; after obtaining such position, the grid is moved - by means of the transmission mechanism - to the work area. After completing this action, the cutting process starts in the cabin, while the next workpiece to be cut is placed on the grid left on the engineering bench during the cutting process. After the completion of the cutting process, the grids are exchanged - the grid with the cut workpieces is taken out of the cabin, the engineering bench is lifted, so that the lower trackway is at the extension of the trackway of the workbench and then the grid with the workpiece prepared for cutting is inserted into the work area, where the next cutting process can be started. Thus, this solution allows for the simultaneous process of cutting - on the grid located inside the cabin and the work related to loading or unloading of the cut material on the grid located on the engineering bench.

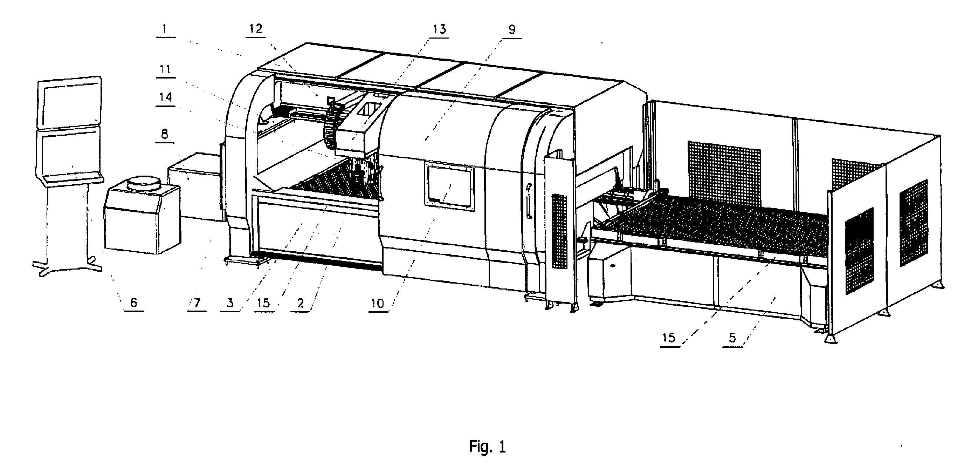

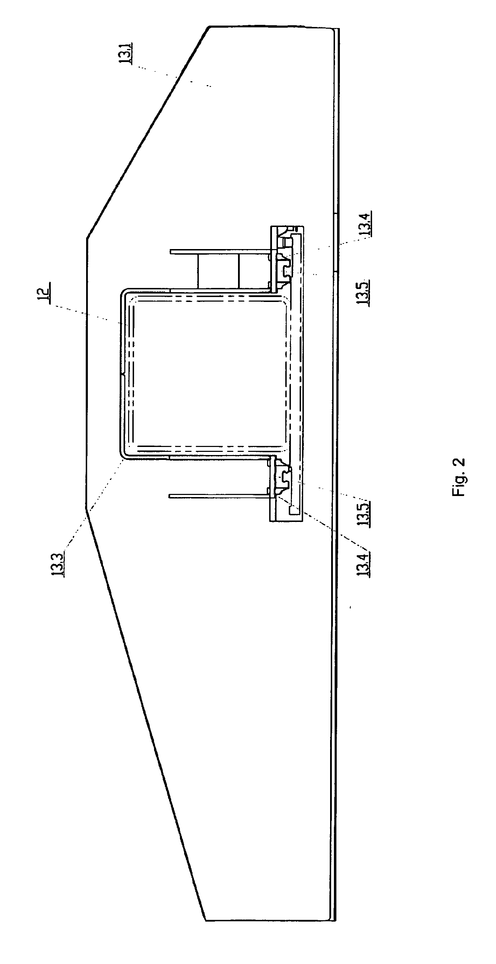

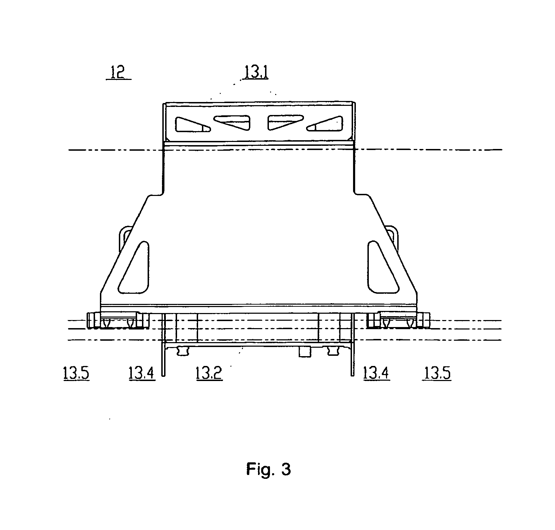

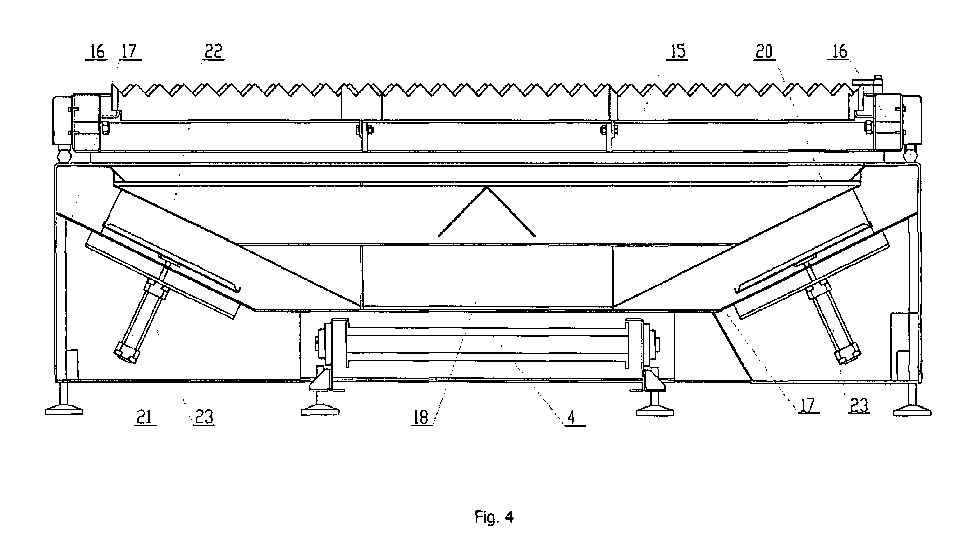

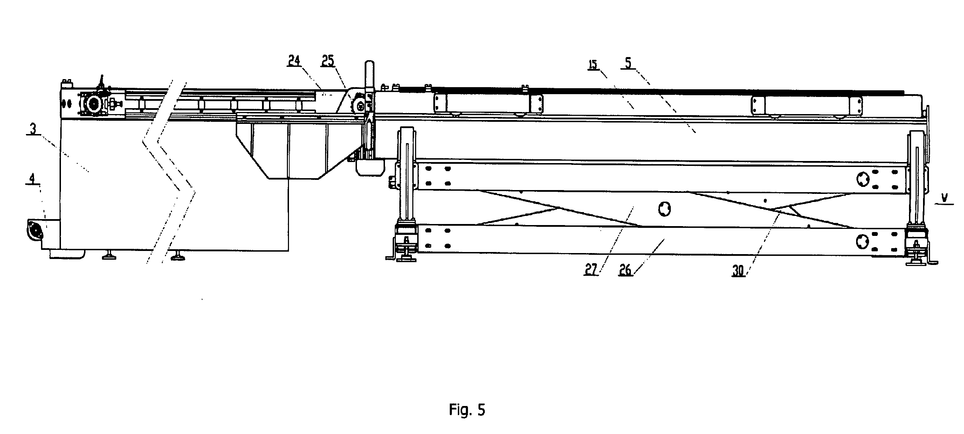

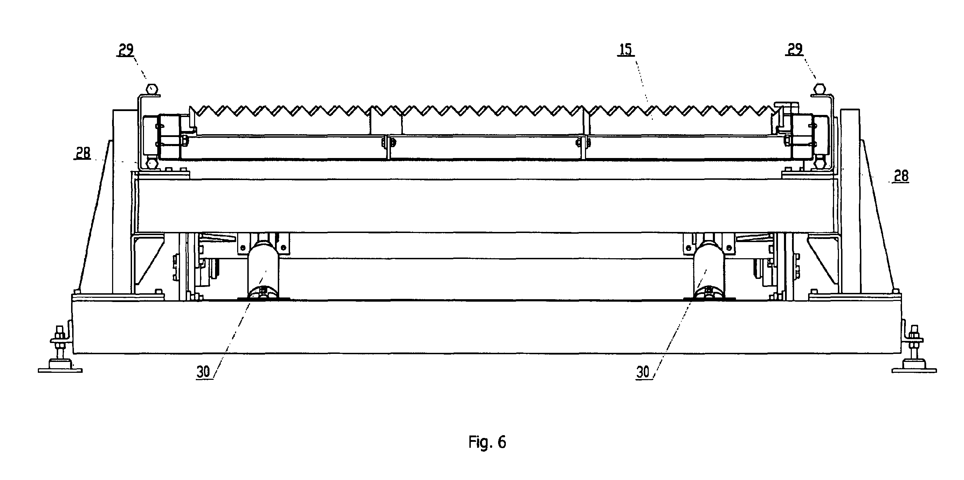

The cutting machine in the exemplary embodiment is shown in the drawing, in which Figure 1 depicts the cutting machine in axonometric view, Figure 2 is the side view of the gantry, Figure 3 is the front view of the gantry, Figure 4 is the diagram of the vertical cross-section of the workbench, Figure 5 is the rear view of the workbench and the engineering bench in the schematic view, Figure 6 is the "W" view of Figure 5.

The cutting machine in the exemplary embodiment comprises a cabin, inside which the following are embedded: tool-in-use system with a laser head 2, workbench 3, lamellar conveyor 4, and outside the cabin 1: engineering bench 5, control panel 6, CNC computer controller 7 and laser source 8. Furthermore, it is equipped with two moving grids 15 which, depending on the phase of the working cycle, are located on the engineering bench 5, or one of them is on the engineering bench 5 and the other on the workbench 3. The cabin in the exemplary embodiment is in the form of a hull, equipped with a sliding door 9 located in parallel to the longer side of the workbench. One visor 10 is embedded in the door 9 plane. The tool-in-use system has a laser source 8, a laser head 2, an optical-fibre cable connecting them - not shown in the drawing, the supporting structure comprising: two side legs 11, main beam 12, gantry 13, carriage 14 and also gantry feed mechanism, carriage feed mechanism and laser head feed mechanism. The gantry 13 in the exemplary embodiment includes two vertical sidewalls 13.1 of the gantry connected together by the horizontal wall - the bottom of the gantry 13.2. The "Y" guide, designed for mounting the carriage, is mounted at the bottom of the gantry. Each sidewall of the gantry is provided with a through hole 13.3 whose surface is greater than the cross-section of the main beam 12. The gantry 13 is fitted with two supports 13.4, on which the sidewalls of the gantry 13.1 are integrally mounted. The supports 13.4 are located on both sides of the main beam 12. Each support 13.4 is equipped with two carriages 13.5. The laser head 2 is mounted slidably on the "Z" guide, fixed to the carriage 14. The carriage 14 is mounted slidably on the "Y" guide which is mounted to the gantry 13, the gantry 13 is mounted slidably on the "X" guide, which is attached to the main beam 12. Each guide: "X", "Y", "Z" comprises two parallel linear tracks, wherein two carriages are mounted on each linear track. The gantry feed mechanism consists of a servomotor located thereon which is connected with a zero backlash planetary gear with a pinion which is mounted on its output shaft and meshed with the toothed bar attached to the main beam in parallel to the linear tracks of the "X" guide. The gantry feed mechanism consists of a servomotor located on the carriage which is connected with a zero backlash planetary gear with a pinion which is mounted on its output shaft and meshed with the toothed bar attached to the gantry in parallel to the linear tracks of the "Y" guide. The laser head feed mechanism consists of a ball screw placed in parallel to the linear tracks of the "Z" guide - with a nut, combined with a servomotor through the belt transmission. The workbench 3 consists of the frame - the footing, on which the grid 15 is mounted slidably. The footing consists of four vertically positioned sidewalls forming a rectangle in a horizontal cross-section. In its upper part there is a trackway 16 comprising two guides - left and right - fixed on the edges of the longer sides of the base. Between the shorter walls of the base two metal sheet plates 17 are attached; they are deflected relatively to one another, so that their planes and the planes of the sidewalls form a V-block whose footing is open and the bottom footing is a flat bottom fitted with an oblong through hole 18, which extends between the sidewalls. The larger base is directed upward - it is an inlet of the V-block, the smaller one, in the part containing a through hole, is the V-block outlet which is located above the lamellar conveyor 4. The interior of the V-block is divided into sections by vertical partitions 19. Inside each section - at the distance supports - there is a chute 20 in the form of a truncated pyramid with open footings; the shorter edges of the chute are located on the lamellar conveyor. The chutes are stabilized in sections only under their own weight. The sloping walls of each section are provided with exit windows 21 covered by a moving flap 22. The moving flaps 22 are mounted on pneumatic actuators 23. The grid feed assembly containing an endless hoisting chain 24 mounted on two return wheels 25 and a drive mechanism in the form of the worm gear motor is attached to the longer side of the workbench - located at the rear wall of the cabin. The hoisting chain 24 is fitted with a carrier designed to be connected with a suitable carrier slot of one of the grids. The engineering bench 3 consists of a support frame 26, the straight-line lifting scissor mechanism 27 mounted thereon, lower trackway 28 mounted on the lifting mechanism 27, upper trackway 29 mounted above the upper trackway 28. Each trackway 28 and 29 consists of two guides - left and right. The trackways are designed for slidable mounting of one grid 15 on each of them. The lifting mechanism 27 is equipped with two hydraulic actuators 30. Each grid 15 has a carrier slot designed for connecting the grid with the carrier of the grid feed assembly. The device is used in a known manner in the process of cutting workpieces.

## Claims

1. A cutting machine equipped with: a cabin (1), inside which there is a tool in-use system with a laser head (2) connected with a laser source by an optical path in the form of an optical-fibre cable, a workbench (3), and a supporting structure, the supporting structure comprising: two side legs (11), a main beam (12), a gantry (13), a carriage (14) and a slag removing device (4), a gantry feed mechanism, a carriage feed mechanism and a laser head feed mechanism, wherein the main beam (12) is located above the workbench (3) in parallel to its longer sides, and is mounted on the side legs located along the shorter sides of the workbench (3), furthermore, the main beam (12) is fitted with the "X" guide, on which the gantry (13) is slidably mounted, equipped with the "Y" guide, on which in turn, slidably, the carriage with the "Z" guide is mounted; on the "Z" guide, slidably, the laser head (2) is mounted which is equipped with two moving grids (15) and elements outside the cabin (1), an engineering bench situated directly behind the workbench (3), a control panel (6), a CNC computer controller (7), with software that enables the control of tools and other cutting processes; the work bench (3) is in the form of a footing which consists of four vertically positioned sidewalls forming a rectangle in a horizontal cross-section; in its upper part there is a grid trackway consisting of two grid guides - left and right, which are mounted on the edges of the longer sides of the footing; the workbench (3) is equipped with a grid feed assembly and a driving mechanism of the feed assembly; the engineering bench consists of a support frame, a straight-line lifting mechanism mounted thereon, lower trackway mounted on a lifting mechanism, upper trackway mounted above the lower trackway; each trackway consists of two guides - left and right placed along with the engineering workbench, so that the guides of the trackway - left and right - of the workbench (3) and the guides of the lower trackway and the upper trackway of the engineering bench are parallel to each other and are positioned respectively in the same vertical plane; **characterized in that** the gantry (13) comprises two vertical gantry sidewalls (13.1) combined with a horizontal wall - gantry bottom (13.2), on which the "Y" guide is mounted, wherein each sidewall (13.1) of the gantry (13) is equipped with a through hole (13.3), through which the main beam (12) is shifted, and the gantry (13) is equipped with two supports of the gantry carriages (13.4), which are connected to the edges of the through holes of the gantry sidewalls (13.1) and are located on both sides of the main beam (12); each grid (15) is equipped with a carriage slot; each guide: "X", "Y", "Z" consists of two parallel linear tracks included respectively in the following feed mechanisms: the gantry feed mechanism, the carriage feed mechanism and the laser head feed mechanism; furthermore, a plate conveyor (4), placed under the workbench (3) is used as a slag removing device; the cabin (1) is in the form of a hull and is fitted with a sliding door (9) which is located in parallel to the longer side of the workbench (3), in which at least one visor (10) is embedded; between the shorter walls of the footing of the workbench (3) there are two metal sheet plates (17) angled relative to each other in such a way, that their planes and the planes of the shorter sidewalls form a V-block whose upper footing is open and the lower is a flat bottom with a longitudinal through hole (18) extending between the shorter sidewalls, wherein the interior of the V-block is divided into sections by vertical partitions (19), which are mounted between sloping metal sheet plates (17) and are perpendicular to them; and inside each section, on the distance supports , there is a chute (20) in the form of a truncated pyramid with open footing, wherein the height of the chute (20) is such that its longer upper edges are similar to vertical partitions and lie below the edge of the vertical partitions, and the shorter upper edges are parallel to the shorter edges of the section, while the lower edges of the chute (20) are located above the plate conveyor (4); and a straight-line scissor mechanism equipped with at least one actuator (30), preferably hydraulic, is used as the lifting mechanism of the engineering bench (5); and a CNC computer controller software enables the control of two tools.

2. The cutting machine according to claim no. 1 **characterized in that** the gantry feed mechanism consists of a servomotor located thereon, which is connected with a zero backlash planetary gear with a pinion mounted on its output shaft, which in turn is meshed with a toothed bar attached to the main beam (12) in parallel to the linear tracks of the "X" guide, while the carriage feed mechanism consists of a servomotor located on the carriage and connected with a zero backlash planetary gear with a pinion mounted on its output shaft, which is meshed with a toothed bar attached to the gantry (13) in parallel to the linear tracks of the "Y" guide, while the laser head feed mechanism (2) consists of a servo motor with belt transmission, a nut and a ball screw - located in parallel to the linear tracks of the "Z" guide; the nut is connected to the belt transmission of the servomotor.

3. The cutting machine according to claim no. 1 **characterized in that** the cabin (1) is equipped with a preview system comprising a camera located inside the cabin and a monitor located outside, preferably on the control panel (6).

4. The cutting machine according to claim no. 1 **characterized in that** the sloping walls of each section are equipped with exit windows (21) covered by moving flaps (22) mounted on actuators (23), preferably air actuators.

5. The cutting machine according to claim no. 4 **characterized in that** the moving flaps (22) are raised above the exit windows when the burning process takes place on the surface of the grid located above the given section; the lifting process of the moving flap (22) is controlled by a CNC computer controller (7).

6. The cutting machine according to claim no. 1 **characterized in that** an endless hoisting chain (24) with a carriage - mounted on two return wheels (25) and attached to the longer side of the workbench located by the rear wall of the cabin is used as a grid feed assembly and a worm gear motor is used as a driving mechanism of the grid feed assembly.

7. The cutting machine according to claim no. 1 **characterized in that** a cutting assembly is equipped with a plasma torch which is mounted slidably on the second carriage with "Z¹" guide; the carriage is mounted slidably on the gantry (13); the "Y¹" guide is mounted on the gantry bottom (13.2); each "Y¹" and "Z¹" guide consists of two parallel linear tracks included respectively in the following feed mechanisms: second carriage of the burner with a plasma torch.

8. The cutting machine according to claim no. 1 **characterized in that** the gantry feed mechanism consists of a servomotor located thereon, which is connected with a zero backlash planetary gear with a pinion mounted on its output shaft which in turn is meshed with a toothed bar attached to the main beam (12) in parallel to the linear tracks of the "X" guide, while the carriage feed mechanism consists of a servomotor located on the carriage and connected with a zero backlash planetary gear with a pinion mounted on its output shaft which is meshed with a toothed bar attached to the gantry (13) in parallel to the linear tracks of the "Y" and "Y¹" guides, while the feed mechanism of each head consists of a servomotor with belt transmission, a nut and a ball screw - located in parallel to the linear tracks of the "Z" and "Z¹" guide; the nut is connected to the belt transmission of the servomotor.

9. The cutting machine according to claim no. 8 **characterized in that** the cabin (1) is equipped with a preview system comprising a camera located inside the cabin and a monitor located outside, preferably on the control panel (6).

10. The cutting machine according to claim no. 8 **characterized in that** the sloping walls of each section are equipped with exit windows (21) covered by moving flaps (22) mounted on actuators (23), preferably air actuators.

11. The cutting machine according to claim no. 11 **characterized in that** the moving flaps (22) are raised above the exit windows when the burning process takes place on the surface of the grid located above the given section; the lifting process of the moving flap is controlled by a CNC computer controller (7).

12. The cutting machine according to claim no. 8 **characterized in that** an endless hoisting chain (24) with a carriage - mounted on two return wheels (25) and attached to the longer side of the workbench located by the rear wall of the cabin is used as a grid feed assembly, and a wormed gear motor is used as a driving mechanism of the grid feed assembly.

## Patentansprüche

1. Das Schneidemaschine umfassend: eine Kabine (1), in der ein Schneidwerk mit einem Laserkopf (2), welcher über einen Strahlengang in Form eines Lichtleiters mit der Laserstrahlquelle verbunden ist, einen Arbeitstisch und eine Tragkonstruktion (3) umfassend: zwei Seitenbeine (11), einen Hauptbalken (12), ein Portal (13), einen Support (14), und darüber hinaus eine Vorrichtung zur Beseitigung der Schlacke (4), eine Portal-, Support- und Laserkopfvorschubvorrichtung, wobei sich der Hauptbalken (12) über den Arbeitstisch (3), parallel zu seinem längeren Seiten befindet und auf Seitenbeinen abgestützt ist, die sich an den kürzeren Seiten des Arbeitstisches (3) befinden; darüber hinaus ist der Hauptbalken mit der Führungsschiene "X" ausgestattet, auf der /verschiebbar/ das Portal (13) angebracht ist, welches mit der Führungsschiene "Y" ausgestattet ist, auf der wiederum /verschiebbar/ der Support mit der Führungsschiene "Z" angeordnet ist; auf der Führungsschiene "Z" ist /verschiebbar/ der Laserkopf (2) angeordnet, der mit zwei Gitterrosten (15) ausgestattet ist; die Schneidemaschine umfasst darüber hinaus Elemente außerhalb der Kabine (1): einen Bearbeitungstisch, der sich direkt hinter dem Arbeitstisch (3) befindet, ein Bedienpult (6), eine CNC-Steuerung (7), die mit der Software zur Steuerung von Werkzeugen und sonstigen Schneidvorgängen ausgestattet ist; dabei hat der Arbeitstisch (3) die Form eines Gestells, das aus vier senkrecht angebrachten Seitenwänden besteht, welche im waagerechten Schnitt einen Rechteck bilden, in dem oberen Bereich des Gestells befindet sich eine Führungsbahn des Gitterrostes, die aus zwei Führungsschienen - einer linken und einer rechten - besteht, welche an längeren Seiten des Gestells angeordnet sind; der Arbeitstisch (3) ist mit einer Gitterrostvorschubvorrichtung und einer Transportantriebsgruppe ausgestattet, der Bearbeitungstisch besteht hingegen aus einem Halterahmen, einem darauf befindlichen linearen Hubwerk, einer unteren Führungsbahn, die auf dem Hubwerk angeordnet ist, und einer oberen Führungsbahn, die über der unteren Führungsbahn angeordnet ist, wobei jede Führungsbahn aus zwei Führungsschienen - einer linken und einer rechten besteht, die über dem Bearbeitungstisch so angeordnet sind, dass die Führungsschienen der Führungsbahnen - der linken und der rechten - am Arbeitstisch (3) und am Bearbeitungstisch in derselben vertikalen Ebene liegen, **dadurch gekennzeichnet, dass** das Portal (13) zwei vertikale Portalseitenwände (13.1) hat, die miteinander durch eine horizontale Wand - den Portalboden (13.2) verbunden sind, auf dem die Führungsschiene "Y" angebracht ist, wobei jede Seitenwand (13.1) des Portals (13) mit einer Durchgangsöffnung (13.3) ausgestattet ist, durch die der Hauptbalken (12) geführt ist, und darüber hinaus das Portal (13) mit zwei Stützen für Portalwagen (13.4) ausgestattet ist, die mit den Rändern der Durchgangsöffnungen der Portalseitenwände (13.1) verbunden und zu beiden Seiten des Hauptbalkens (12) angeordnet sind, wobei jeder Gitterrost (15) mit einer Mitnehmerbuchse ausgestattet ist; die Führungsschiene "X", "Y", "Z" besteht aus zwei parallel verlaufenden Linearführungen, die entsprechend zu der Portal-, Support- und Laserkopfvorschubvorrichtung gehören, darüber hinaus als Vorrichtung zur Beseitigung der Schlacke ein Plattenbandförderer (4) eingesetzt wird, der unter dem Arbeitstisch (3) angeordnet ist, wobei die Kabine (1) die Form einer Einhausung hat und mit einer Schiebetür (9) ausgestattet ist, die parallel zu der längeren Seite des Arbeitstisches (3) angebracht ist und in der mindestens ein Schauloch (10) angeordnet ist; zwischen den kürzeren Seiten des Arbeitstisches (3) sind zwei Bleche (17) montiert, die einander so abgelenkt sind, dass ihre Flächen und die Flächen der Seitenwände ein Prisma bilden, dessen obere Basis offen ist und die untere Basis einen flachen Boden darstellt, in dem sich eine längliche Durchgangsöffnung (18) zwischen den kürzeren Seitenwänden befindet (18), wobei das Innere des Prismas mit vertikalen Trennwänden (19) in Bereiche aufgeteilt ist, die zwischen schrägen Blechen (17) angeordnet sind und parallel dazu verlaufen; in jedem Bereich (auf Distanzstützen) befindet sich eine Rutsche (20) in Form eines Pyramidenstumpfes mit offenen Basen, wobei die Höhe der Rutsche (20) so angepasst ist, dass ihre längeren, oberen Kanten nah an vertikalen Trennwänden, leicht unter den Rändern der vertikalen Trennwände liegen, die kürzeren, oberen Kanten parallel zu den kürzeren Kanten der Bereiche verlaufen und die unteren Kanten der Rutsche (20) sich über dem Plattenbandförderer (4) befinden; als Hubvorrichtung des Bearbeitungstisches (5) wird linearer Scherenmechanismus verwendet, der mit mindestens einem Zylinder (30) am besten einem Hydraulikzylinder ausgestattet ist; darüber hinaus ermöglicht die Software der CNC-Steuerung die Steuerung von zwei Werkzeugen.

2. Die Schneidemaschine nach Anspruch 1, **dadurch gekennzeichnet, dass** die Portalvorschubvorrichtung aus einem darauf befindlichen Servomotor besteht, der mit einem spielfreien Planetengetriebe mit einem Zahnrad verbunden ist, welches an seiner Ausgangswelle angebracht ist; dieses Zahnrad ist mit einer Zahnstange, welche am Hauptbalken (12), parallel zu den Linearführungen der Führungsschiene "X" befestigt ist, verzahnt; die Supportvorschubvorrichtung besteht aus einem darauf befindlichen Servomotor besteht, der mit einem spielfreien Planetengetriebe mit einem Zahnrad verbunden ist, welches an seiner Ausgangswelle angebracht ist; dieses Zahnrad ist mit einer Zahnstange, welche am Portal (13), parallel zu den Linearführungen der Führungsschiene "Y" befestigt, verzahnt ist; die Laserkopfvorschubvorrichtung (2) besteht aus einem Servomotor mit einem Riemengetriebe, einer Mutter und einem Kugelrollspindel, der parallel zu Linearführungen der Führungsschiene "Z" angebracht ist, wobei die Mutter mit dem Riemengetriebe des Servomotors verbunden ist.

3. Die Schneidemaschine nach Anspruch 1, **dadurch gekennzeichnet, dass** die Kabine (1) mit einem Vorschausystem ausgestattet ist, das aus einer in der Kabine befindlichen Kamera und einem außerhalb der Kabine, am besten am Bedienpult (6) befindlichen Bildschirm besteht.

4. Die Schneidemaschine nach Anspruch 1, **dadurch gekennzeichnet, dass** die Schrägwände jedes Bereichs mit Austrittsfenstern (21) ausgestattet sind, die mit beweglichen, auf Zylindern (23), am besten auf pneumatischen Zylindern angeordneten Klappen (22) abgedeckt sind.

5. Die Schneidemaschine nach Anspruch 4, **dadurch gekennzeichnet, dass** die beweglichen Klappen (22) über den Austrittsfenstern angehoben sind, wenn der Verbrennungsprozess auf dem Teil des Gitterrostes stattfindet, der sich über dem jeweiligen Bereich befindet, wobei der Prozess der Anhebung der beweglichen Klappen (22) mit der CNC-Steuerung (7) gesteuert wird.

6. Die Schneidemaschine nach Anspruch 1, **dadurch gekennzeichnet, dass** als Mittel zum Transport der Gitterroste eine endlose Hubkette (24) mit einem Mitnehmer verwendet wird, der an zwei Umlenkrädern (25) angebracht und an den längeren Seite des Arbeitstisches befestigt ist, welcher sich an der Rückwand der Kabine befindet, und dass als Antriebsmechanismus der Gittertransportvorrichtung ein Schneckengetriebemotor verwendet wird.

7. Die Schneidemaschine nach Anspruch 1, **dadurch gekennzeichnet, dass** das Schneidwerk mit einem Plasmabrenner ausgerüstet ist, der auf dem zweiten Support mit der Führungsschiene Z¹, angebracht ist, dieser Support ist verschiebbar am Portal (13) angebracht und am Portalboden (13.2) befindet sich die Führungsschiene Y¹, wobei jede Führungsschiene "Y¹" und "Z¹" aus zwei parallelen Linearführungen besteht, die entsprechend zu der Vorschubeinrichtung des zweiten Supports mit dem Plasmabrenner gehören.

8. Die Schneidemaschine nach Anspruch 1, **dadurch gekennzeichnet, dass** die Portalvorschubvorrichtung aus einem darauf befindlichen Servomotor besteht, der mit einem spielfreien Planetengetriebe mit einem Zahnrad verbunden ist, welches an seiner Ausgangswelle angebracht ist; dieses Zahnrad ist mit einer Zahnstange, welche am Hauptbalken (12), parallel zu den Linearführungen der Führungsschiene "X" befestigt ist, verzahnt; die Supportvorschubvorrichtungen bestehen aus dem auf jedem von ihnen befindlichen Servomotor, der mit einem spielfreien Planetengetriebe mit einem Zahnrad verbunden ist, welches an seiner Ausgangswelle angebracht ist; dieses Zahnrad ist mit einer Zahnstange, welche am Portal (13), parallel zu den Linearführungen der Führungsschiene "Y"- und "Y¹" befestigt ist, verzahnt; die Vorschubvorrichtung jedes der Laserköpfe besteht aus einem Servomotor mit einem Riemengetriebe, einer Mutter und einem Kugelrollspindel, der parallel zu Linearführungen der Führungsschienen "Z" und "Z¹" angebracht ist, wobei die Mutter mit dem Riemengetriebe des Servomotors verbunden ist.

9. Die Schneidemaschine nach Anspruch 7, **dadurch gekennzeichnet, dass** die Kabine (1) mit einem Vorschausystem ausgestattet ist, das aus einer in der Kabine befindlichen Kamera und einem außerhalb der Kabine, am besten am Bedienpult (6) befindlichen Bildschirm besteht.

10. Die Schneidemaschine nach Anspruch 8, **dadurch gekennzeichnet, dass** die Schrägwände jedes Bereichs mit Austrittsfenstern (21) ausgestattet sind, die mit beweglichen, auf Zylindern (23), am besten pneumatischen Zylindern angeordneten Klappen (22) abgedeckt sind.

11. Die Schneidemaschine nach Anspruch 10, **dadurch gekennzeichnet, dass** die beweglichen Klappen (22) über den Austrittsfenstern angehoben sind, wenn der Verbrennungsprozess auf dem Teil des Gitterrostes stattfindet, die sich über dem jeweiligen Bereich befindet, wobei der Prozess der Anhebung der beweglichen Klappen mit der CNC-Steuerung (7) gesteuert wird.

12. Die Schneidemaschine nach Anspruch 7, **dadurch gekennzeichnet, dass** als Mittel zum Transport der Gitterroste eine endlose Hubkette (24) mit einem Mitnehmer verwendet wird, der an zwei Umlenkrädern (25) angebracht und an den längeren Seite des Arbeitstisches befestigt ist, welcher sich an der Rückwand der Kabine befindet, und dass als Antriebsmechanismus der Gittertransportvorrichtung ein Schneckengetriebemotor verwendet wird.

## Revendications

1. La machine de découpe équipée de : cabine (1) à l'intérieur de ladite cabine l'ensemble des outils de coupe est monté - avec la tête laser (2) reliée à la source laser par un trajet optique sous forme d'un câble à fibres optiques, la table de travail et le bâti porteur (3) comportant : deux pieds latéraux (11), poutre principale (12), portique (13), support (14), et un dispositif d'élimination des scories (4)un mécanisme d'avance du portique, un mécanisme d'avance du support et un mécanisme d'avance de la tête laser, où la poutre principale est située (12) est située au-dessus de la table de travail (3) en parallèle aux côtés plus longs, et elle est montée sur les pieds latéraux situés le long des côtés plus courts de la table de travail (3); en outre la poutre principale est équipée du guide « X », sur ledit guide /en coulissant/ le portique (13) est monté équipé du guide « Y », sur lequel à son tour /en coulissant/ est monté le support avec le guide « Z », sur ledit guide « Z » est à son tour montée /en coulissant/ la tête laser (2), qui est équipée de deux grilles de travail (15) et des éléments en dehors de la cabine (1): table support située directement derrière la table de travail (3), panneau de commande (6), contrôleur numérique CNC (7) - équipé d'un logiciel permettant la surveillance des outils et des autres processus de découpe ; la table de travail (3) se présente sous forme d'une base qui se compose de quatre parois latérales positionnées verticalement formant un rectangle en coupe horizontale, et la voie de roulement de la grille est située dans la partie supérieure, ladite voie est composée de deux guides - gauche et droit - fixés sur les bords des côtés les plus longs de la base ; la table de travail (3) est équipée du système de transport des grilles, ainsi que du mécanisme d'entraînement de l'unité de transport, tandis que la table support est composée d'un bâti porteur, un mécanisme de levage monté sur celui-ci, la voie de roulement inférieure montée sur le mécanisme de levage, la voie de roulement supérieure montée au-dessus de la voie de roulement inférieure, chaque voie de roulement se compose de deux guides - gauche et droit, situés avec la table support de telle manière que les guides de la voie de roulement - gauche et droit - de la table de travail (3) guides de la voie de roulement inférieure et de la voie de roulement supérieure de la table support sont parallèles entre eux et se trouvent respectivement au même plan vertical, **caractérisée en ce que** le portique (13) comporte deux parois latérales verticales dudit portique (13.1) reliées l'une avec l'autre par une paroi horizontale - le fond du portique (13.2), sur lequel le guide « Y » est monté, tandis que chaque paroi latérale (13.1), du portique (13) munie de l'orifice traversant (13.3) la poutre principale (12) étant déplacée à travers ledit orifice, en outre le portique (13) est doté de deux supports des chariots dudit portique (13.4), qui sont liés avec les bords des orifices traversant des parois latérales du portique (13.1), et qui sont situés des deux côtés de la poutre principale (12), chaque grille (15) est équipée d'un siège de raclette; et chaque guide «X», «Y», «Z» est composé de deux pistes linéaires parallèles faisant partie respectivement des mécanismes d'avance : du portique, du support et de la tête laser, et aussi comme un dispositif d'élimination des scories est utilisé le convoyeur à palettes (4) - situé sous la table de travail (3) tandis que la cabine (1) se présente sous forme d'une enveloppe et elle est dotée de portes coulissantes (9) - situées en parallèle à la longueur de la table de travail (3), dans le plan de ladite porte , au moins un viseur (10) est intégré ; tandis qu'entre les parois plus courtes de la base de la table de travail (3) deux plaques de tôle (17) sont fixées déviées l'une par rapport à l'autre de telle manière que leurs plans et les plans des parois latérales forment un bloc en Vé dont la base supérieure est ouverte, tandis que la base inférieure constitue un fond plat muni d'un orifice oblong (18) traversant qui s'étendant entre les parois latérales plus courtes, l'intérieur du bloc en Vé est divisé en sections par des cloisons verticales (19)qui sont situées entre les tôles inclinées (17) et sont perpendiculaires par rapport à lesdites tôles, à l'intérieur de chaque section /sur les appuis de distance/ une goulotte d'évacuation est placée (20) sous la forme d'une pyramide tronquée avec des bases ouvertes, dans lequel la hauteur de la goulotte (20) est telle que ces bords supérieurs plus longs sont voisins aux cloisons verticales et sont situées au-dessous des bords des cloisons verticales, et les bords supérieures plus courts sont en parallèle aux bords plus courts des sections, tandis que les bords inférieurs de la goulotte (20) sont situés sur au-dessus du convoyeur à palettes (4), et en tant que le mécanisme de levage de la table support (5) le mécanisme à ciseaux avec au moins un vérin (30) est choisi, avantageusement hydraulique, et le logiciel du contrôleur numérique CNC permet la surveillance de deux outils.

2. La machine de découpe selon la revendication 1 **caractérisée en ce que** le mécanisme d'avance du portique est constitué d'un servomoteur placé sur celui-ci et qui est connecté avec un engrenage planétaire sans jeu avec un pignon monté sur son arbre de sortie; ledit pignon est engrené avec une crémaillère fixée à la poutre principale (12) en parallèle aux pistes linéaires du guide « X », tandis que le mécanisme d'avance du support est constitué d'un servomoteur connecté avec un engrenage planétaire sans jeu avec un pignon monté sur son arbre de sortie; le pignon est engrené avec une crémaillère fixée au portique (13) en parallèle aux pistes linéaires du guide« Y », et le mécanisme d'avance de la tête laser (2) se compose d'un servomoteur avec transmission à courroie, écrou et vis à billes - située en parallèle aux voies de roulement linéaires de guide « Z » où ledit écrou est combiné au servomoteur par l'intermédiaire de la transmission à courroie.

3. La machine de découpe selon la revendication 1 **caractérisée en ce que** la cabine (1) est équipée d'un système de visionnage composé d'une caméra située à l'intérieur de la cabine et d'un écran placé à l'extérieur, avantageusement sur le panneau de contrôle (6).

4. La machine de découpe selon la revendication 1 **caractérisée en ce que** les parois inclinées de chaque section sont équipées des fenêtres de sortie (21) couvertes par des volets mobiles (22) montés sur les vérins (23), avantageusement pneumatiques.

5. La machine de découpe selon la revendication 4 **caractérisée en ce que** les volets mobiles (22) sont ouverts au-dessus des fenêtres de sortie au moment où le processus de découpe se déroule sur la surface de la grille située au-dessus de la section donnée, tandis que le processus de soulèvement des volets mobiles (22) est contrôlé par le contrôleur numérique CNC (7).

6. La machine de découpe selon la revendication 1 **caractérisée en ce que** le système de transport des grilles, est constitué de la chaîne de levage (24) sans fin, avec la raclette - montée sur deux roues de renvoi (25) monté sur le côté plus long de la table de travail, ledit côté se trouvant près de la paroi arrière de la cabine, et le mécanisme d'entraînement des grilles se présente sous forme de motoréducteur à vis sans fin.

7. La machine de découpe selon la revendication 1 **caractérisée en ce que** l'unité de coupe est équipée du chalumeau au plasma qui est monté en coulissant sur le second support avec le guide Z¹, ledit support est monté en coulissant sur le portique (13) et sur le fond du portique (13.2) le guide Y¹ est monté, tandis que chaque guide «Y¹» et «Z¹» se composent de deux pistes linéaires parallèles faisant partie respectivement des mécanismes d'avance : du second support de la tête avec le chalumeau au plasma.

8. La machine de découpe selon la revendication 1 **caractérisée en ce que** le mécanisme d'avance du portique est constitué d'un servomoteur placé sur celui-ci et qui est connecté avec un engrenage planétaire sans jeu avec un pignon monté sur son arbre de sortie; ledit pignon est engrené avec une crémaillère fixée à la poutre principale (12) en parallèle aux pistes linéaires du guide « X », tandis que les mécanismes d'avance des supports sont constitués d'un servomoteur connecté avec chaque de lesdits guides avec un engrenage planétaire sans jeu avec un pignon monté sur son arbre de sortie; le pignon est engrené avec une crémaillère fixée au portique (13) en parallèle aux pistes linéaires des guides « Y » et « Y¹ », et le mécanisme d'avance de chaque tête se compose d'un servomoteur avec transmission à courroie, écrou et vis à billes - située en parallèle aux voies de roulement linéaires des guides « Z » et « Z¹ » où ledit écrou est combiné au servomoteur par l'intermédiaire de la transmission à courroie.

9. La machine de découpe selon la revendication 7 **caractérisée en ce que** la cabine (1) est équipée d'un système de visionnage composé d'une caméra située à l'intérieur de la cabine et d'un écran placé à l'extérieur, avantageusement sur le panneau de contrôle (6).

10. La machine de découpe selon la revendication 8 **caractérisée en ce que** les parois inclinées de chaque section sont équipées des fenêtres de sortie (21) couvertes par des volets mobiles (22) montés sur les vérins (23), avantageusement pneumatiques.

11. La machine de découpe selon la revendication 10 **caractérisée en ce que** les volets mobiles (22) sont ouverts au-dessus des fenêtres de sortie au moment où le processus de découpe se déroule sur la surface de la grille située au-dessus de la section donnée, tandis que le processus de soulèvement des volets mobiles (7).

12. La machine de découpe selon la revendication 7 **caractérisée en ce que** le système de transport des grilles, est constitué de la chaîne de levage (24) sans fin, avantageusement, avec la raclette - montée sur deux roues de renvoi (25) monté sur le côté plus long de la table de travail, ledit côté se trouvant près de la paroi arrière de la cabine, et le mécanisme d'entraînement des grilles se présente sous forme de motoréducteur à vis sans fin.
